# EUROPEAN PATENT APPLICATION

(11) **EP 4 280 164 A1**
(43) Date of publication of application: **22.11.2023**
(21) Application number: 22174531.8
(22) Date of filing: 20.05.2022
(51) Int. Cl.: G06T 19/00

(54) **COMPUTER IMPLEMENTED METHOD FOR ADJUSTING A MORPHOLOGY OF A HEART VALVE MODEL, COMPUTER PROGRAM AND SYSTEM**

(71) Applicant: Koninklijke Philips N.V., 5656 AG Eindhoven (NL)
(72) Inventor: BLITZ, Alexandra, Eindhoven (NL); BLANKENHAGEN, Michael, Eindhoven (NL); SCHRECKENBERG, Marcus, 5656AG Eindhoven (NL)
(74) Representative: Philips Intellectual Property & Standards

(57) **Abstract**

A computer implemented method for adjusting a morphology of a heart valve model segmented from a 3D or 4D volume data set is provided, the method comprising:
providing a 3D visualisation of a segmented heart valve (2) on a user interface, wherein the heart valve is segmented from the 3D or 4D volume data set,
creating a topology-based 2D model (3) of the heart valve,
displaying the 2D model (3) on the user interface,
receiving user input data for further adjusting the 2D model (3) via the user interface. Further, a computer program and a system for analysing a heart valve is provided.

## Description

### FIELD OF THE INVENTION

The present invention relates to a computer implemented method for adjusting a morphology of a heart valve model segmented from a 3D or 4D volume data set, a computer program and a system for analysing a heart valve.

### BACKGROUND OF THE INVENTION

Some anatomical structures are hard to visualise due to a concealed arrangement and/or a movement of the anatomical structure in the human body. An example for such anatomical structure is the tricuspid valve which is especially hard to visualise in echocardiography due to its position and structure. In particular, the leaflets of the tricuspid valve can only be seen in a couple of frames throughout a heart cycle, and often not all of them in the same frame. Segmentation and tracking of the leaflets in an echocardiography clip has not been successful so far. To address common pathologies such as tricuspid regurgitation more and more implant devices and procedures are emerging. These procedures require thorough planning to make them as safe and successful as possible. For planning and navigating these procedures, novel imaging approaches in echocardiography are needed. Knowledge of the morphology of the valve leaflets is essential for several procedures. Further, anatomical landmarks of a heart valve are not very intuitive to mark and hard to edit in a moving 4D clip.

US 2005187461 A discloses a computerized method of facilitating cardiac intervention, comprising inputting patient data, creating a computerized interactive model of a heart based on the patient data, wherein the model comprises features, simulating at least one proposed cardiac intervention treatment by adding or deleting features to the model, and determining the effects of the proposed cardiac simulation upon the entire model. Simulations may be repeated to allow the user to determine an optimal cardiac intervention. Additionally, a template may be created from the model to use as a guide during the cardiac intervention.

US 2020082531 A1 shows a device for dynamically assessing a moving object from a sequence of consecutive volumetric image frames of such object, which images are timely separated by a certain time interval, by: identifying in at least one image of the sequence the object of interest; segmenting the object to identify object contour; propagating the object contour as identified to other images of the sequence; and performing dynamic analysis of the object based on the object contour as propagated.

However, assessing the topology of a heart valve remains cumbersome, and preparing surgical procedures is therefore still difficult.

### OBJECT OF THE INVENTION

Therefore, it is one object of the present invention to provide a method and device which may provide an easy and intuitive way to asses anatomical structures even if the anatomical structure is hard to visualize.

### SUMMARY OF THE INVENTION

The present invention solves this problem with a computer implemented method including the features of claim 1, with a computer program including the features of claim 14 and a system including the features of claim 15.

According to one aspect, the present invention provides a computer implemented method for adjusting a morphology of a heart valve model segmented from a 3D or 4D volume data set, the method comprising:
providing a 3D visualisation of a segmented heart valve on a user interface, wherein the heart valve is segmented from the 3D or 4D volume data set,
creating a topology-based 2D model of the heart valve,
displaying the 2D model on the user interface,
receiving user input data for further adjusting the 2D model via the user interface.

According to an embodiment of the present invention, the method projects a topology-based model 2D on the actual segmentation of the valve annulus. The model may be edited to depict any type of the morphologies of the heart valve. In other words, the 2D model may be basically created based on the segmented heart valve and may then further manually adjusted by the user so as to represent the morphology of the segmented heart valve. As a result, the 2D model may be accurately adjusted to morphology of the actual heart valve. The 2D model may be also referred to as a symbolic valve model that could be used as a research and communication tool for valve research, comparison between patients, longitudinal comparison of one patient's valve, disease progression analysis, consult between physicians, etc. The method may provide a digital joystick with which a user may transfer the topology on a 3D or 4D dataset, as well as a valve dashboard to visualise phenomena from the 3D or 4D dataset on the topology. The method is applicable to all heart valves.

The method may be used for adjusting a morphology of the 2D model. Morphology may include aspects of the outward appearance of the heart valve (e.g., shape, structure, pattern, size, etc.), i.e., external morphology (or eidonomy), as well as the form and structure of the constituent parts of the heart valve like leaflets, anulus, etc. i.e., internal morphology (or anatomy). This is in contrast to physiology, which deals primarily with function. Morphology may be considered as a branch of life science dealing with the study of gross structure of an anatomical structure and its constituent parts.

The 3D or 4D volume data set may include information of an anatomical structure in three dimensional (3D) or four dimensions (4D). From the anatomical structure the heart valve may be segmented in a known manner. For example, the segmentation may be carried out as shown in DROGE, Hannah, et al. Mitral Valve Segmentation Using Robust Nonnegative Matrix Factorization. Journal of Imaging, 2021, 7. Jg., Nr. 10, S. 213 which is incorporated therein by reference. Further, the 3D or 4D volume data set may include the heart as the anatomical structure. The three-dimensional information may define a spatial position of one point in space. In addition, the fourth dimension may further include the time, that is, the position of the point over a period of time. In other words, the 4D volume dataset may be a video clip containing a plurality of frames (i.e., 3D information) covering, for example, a heartbeat cycle. The 3D or 4D volume dataset may be provided in DICOM (Digital Imaging and Communications in Medicine) format. However, the 3D or 4D volume dataset may be provided in any other suitable format as long as it includes 3D or 4D information of an anatomical structure.

The heart valve may be referred to as a dynamic anatomical structure because it changes its dimension over time. The 3D or 4D volume data set may be captured in a sequence of three-dimensional medical images obtained from a human subject spanning a time period, where the images may be pre-operative images, but may also be intra-operative images. The 3D or 4D volume dataset may comprise medical images. A sequence of 3D medical images may be termed a 4D image. A three-dimensional (3D) image is usually a digital image, e.g., in DICOM standard, i.e. containing a three-dimensional array of voxels, each voxel containing a grey scale value. Such 3D medical images have typically been obtained from a field of view containing the dynamic anatomical structure using a medical imaging modality, such as MR, computed tomography (CT), positron emission tomography (PET) or ultrasound (US). When the anatomical structure is the heart, ultrasound and in particular transesophageal echocardiography (TEE) may be advantageously used. One 3D image from the time sequence of 3D images is also called a "frame" in the following. The 3D images may be acquired with a frame rate of e.g., 5 - 100, preferably 20 - 60 images per second, so as to allow a smooth representation of the dynamically moving anatomical structure, where it is displayed in cine mode. The time period is usually at least one cycle of the cyclical movement, e.g., at least one heartbeat.

The 3D visualisation (also referred to as 3D or 4D echo) may be a 3D volume rendering of the 3D or 4D volume dataset. The 3D volume rendering may comprise a set of techniques used to display a 2D projection of a 3D image data set. However, although 3D volume rendering is helpful in forming a mental 3D model of the anatomy, it is strongly dependent on the image quality, as well as on the selected settings (threshold, smoothing etc.). Volume rendering has the advantage that it is suitable for more complex anatomies like valve leaflet, or the tricuspid leaflet. Further, parameters like threshold, opacity, contrast can be adjusted "live", i.e., with immediate effect while watching at the volume rendering. On the other hand, volume rendering is strongly dependent on the image quality and thus might be too complex for an easy interpretation, when used alone. Alternatively or additionally, the 3D visualisation of the segmented heart valve may be a shape/surface 3D-model. The surface 3D-model may be a simplification of the heart valve, for example a triangulated surface 3D-model. The 3D-model may comprise a number of points spanning a line or a surface for each frame. It may also be a mathematical model, for example a parametrised model, such as a surface or volume spanned by spline curves. The 3D-model may be dynamic, i.e., it follows the movement of the anatomical structure (e.g., the heart valve) across the time period. The purpose of the dynamic 3D-model is to visualise the essential constituent components of the heart valve (e.g., the leaflets) and to the change of the heart valve over time. The 3D model has the advantage that it does not require as much computing power compared to 3D rendering and still gives the user the essential features of the heart valve. However, with the 3D model alone, the user still cannot track all the features of the heart valve over a complete heartbeat cycle. For example, leaflets of the heart valve (e.g., the tricuspid valve) may be only seen in a couple of frames throughout the heart cycle, and often not all of them in the same frame. This limitation may be due to the nature of the imaging modality, which does not allow the acquisition angle to be freely changed as in echocardiography. In this respect, the topology-based 2D model will help the user (more details follow below).

In order to allow a user to view and analyse the heart valve (i.e., the region of interest), a three-dimensional visualisation environment may be provided for visualising the visualisation of the segmented heart valve across a time period. That is, the visualisation of the segmented heart valve and the topology-based 2D model may be depicted within the same visualisation environment. The visualisation environment may be used to view and analyse the heart valve, in particular for planning interventions and/or determining the correct size, shape and position of implant to be implanted in future interventions.

The visualisation environment may be a three-dimensional visualisation environment or a virtual reality environment. By "virtual reality", any computer-generated visualisation providing a truly three-dimensional experience of the depicted structure is meant. Accordingly, the virtual reality (VR) environment of the invention provides in particular visual feedback, but may also allow other types of sensory feedback, such as auditory. The VR environment may also be an augmented reality environment, wherein the user still sees the real environment, but with the VR objects (e.g., the volume rendering and the dynamic model) overlaid or superimposed on the reality objects, or a mixed reality, in which real-world objects are superimposed on a virtual scene.

The segmented heart valve may be a part of the anatomical structure included within the 3D or 4D volume data set. The segmented heart valve may be obtained automatically based on the 3D or 4D volume data set. That is, the 3D visualisation of the segmented heart valve may only depict the heart valve. The surrounding anatomical structure may be omitted. Therefore, the clearness of the visualisation is improved, and the user may focus on the essential part of his or her assessment.

The user interface may be a device which is configured to receive user input and to visualise the 3D visualisation of the segmented heart valve and the 2D model to the user. That is, the user interface may be an interface between the human and machine. Preferably, the user interface may comprise a display configured to display the 3D visualisation and the 2D model to the user. In addition, the user interface may comprise an input device which may be operated by a user and may input user commands to the user interface. In particular, the display may be a touch sensitive display. In this case no additional input device may be necessary as the user may input his or her commands via the display. The user interface may comprise a processor and a storage for storing information. Preferably, the user interface is a computer.

The topology-based 2D model may be a two dimensional simplified visualisation of the heart valve. The topology-based 2D model may be a standardized simplification of the actual segmentation of the heart valve. Simplification may mean that the three-dimensional representation of the heart valve (i.e., the segmented heart valve) is transferred to a two-dimensional visualisation of the heart valve (i.e., the topology-based 2D model). An annulus of the segmented heart valve may lie freely in space, and points on the annulus may be described by three variable coordinates, each of which may be different. On the other hand, the annulus of the topology-based 2D model may be described by points having only two variable coordinates (i.e., a coordinate is the same for every point).

Preferably, the annulus may be represented by a circle. The length or circumference (e.g., circumference length or circumference shape) of the circle may correspond to the length or circumference of the annulus. The topology of the heart valve may be characterized by a number of leaflets of the heart valve. In addition, the topology of the heart valve may be further characterized by a position, area and/or shape of the leaflets. Accordingly, the topology-based 2D model may a simplified visualisation of the characteristics of the heart valve. Furthermore, the circumference of the circle surrounding or defining the topology-based 2D model may be the same length regardless of the actual length of the heart valve annulus. Accordingly, the topology-based 2D model may be further simplified. In addition, the topology-based 2D models of different heart valves can be easily compared with each other.

The creation of the topology-based 2D model may be executed automated. That is, a rough topology-based 2D model may be automatically created. Then, the user may adjust the topology-based 2D model such that it fits best to the 3D visualisation of the segmented heart valve (more details of the adjustment follow below). Moreover, a standard topology-based 2D model may be initially provided. Then, the user may adjust the topology-based 2D model to the visualisation of the segmented heart valve. That is, the standard topology-based 2D model may always be the same independent of the specific heart valve under examination. Further, the topology-based 2D model may be a static symbolic representation of the heart valve. In other words, even if the 3D or 4D visualisation of the segmented heart valve is depicted over a heartbeat, for example, the topology-based 2D model may remain static (i.e., does not move or amend its shape or configuration). Accordingly, the user is able to adapt the topology-based 2D model to the dynamic (4D) visualisation of the heart valve using the static symbolic representation of the topology-based 2D model. Preferably, the user may observe the result of the adapting instantly in the dynamic visualisation of the heart valve. According to a further embodiment, an expansion to more dynamic surface models are possible (e.g., edit the shape of coaptation lines). The model may be edited to depict any type of the morphologies of the heart valve. The topology-based 2D model may be depicted on the same user interface as the segmented heart valve. Receiving user input may mean that the user inputs commands to adjust the topology-based 2D model. This may be done directly by adjusting the topology-based 2D model. Alternatively or additionally, the user may also adjust the segmented heart valve and the topology-based 2D model may be indirectly adjusted by the user input.

According to a further embodiment the topology-based 2D model is created by mapping the segmented heart valve to scale onto a plane. Accordingly, the proportions along the circumference of the annulus of the segmented heart valve may be preserved. That is, the topology-based 2D model may be projected onto a plane or surface. Further, the topology-based 2D model may be distorted during projection to a 2D surface. In this case the topology-based 2D model is not a developable surface (neither is it a ruled surface). In an alternative embodiment the topology-based 2D model is created based on a developable surface of the segmented heart valve. For example, the topology-based 2D model may be a developable surface. In mathematics, a developable surface (or torse: archaic) is a smooth surface with zero Gaussian curvature. That is, it is a surface that can be flattened onto a plane without distortion (i.e., it can be bent without stretching or compression). Conversely, it is a surface which can be made by transforming a plane (i.e., "folding", "bending", "rolling", "cutting" and/or "gluing"). In three dimensions all developable surfaces are ruled surfaces (but not vice versa). In this case, topology-based 2D model may be the developable surface based on the 3D visualisation of the segmented heart valve. In this case, the topology-based 2D model may have a dimension that is related to the segmented 3D segmentation of the heart valve. That is, the circumference length of the topology-based 2D model may correspond to the circumference length of the segmented heart valve. Accordingly, further information may be derived from the topology-based 2D model.

According to a further embodiment of the present invention the topology-based 2D model is displayed on the user interface next to the 3D visualisation of the segmented heart valve. That is, the topology-based 2D model and the 3D visualisation of the segmented heart valve may be displayed on the same interface (e.g., display). Preferably, the 3D visualisation of the segmented heart valve and the topology-based 2D model are depicted directly adjacent to each other. In this case, the user may easily adjust the topology-based 2D model while looking at the3D visualisation of the segmented heart valve. Hence, the process of adjusting the topology-based 2D model may be further facilitated. Preferably, the topology-based 2D model is displayed adjacent to the segmented heart valve and is additionally projected onto the segmented heart valve. That is, the commissure points and/or lines are projected onto the segmented heart valve. In this way, the topology-based 2D model may be easily adapted to the segmented heart valve.

According to a further embodiment, the 2D model includes commissure points defining at least one commissure line being indicative of a separating line between at least two leaflets of the heart valve. The commissure points may define a specific area where the leaflets meet at their junction with the annulus. For example, the point may be the position where anterior and posterior leaflets meet at their junction with the annulus. The commissure points may be used to define segments of the leaflets. In more detail, by connecting the commissure points with straight lines, leaflets of the heart valve may be visualized in a simplified manner. Further, the commissure points may describe a subtle structure that can be identified by two anatomical landmarks, for example, the axis of the corresponding papillary muscles and the commissure chordae, which have a specific fan-like configuration. Several millimetres of valve tissue separate the free edge of the commissure points from the annulus. This area must be observed in the event of prolapse of a commissure point and the corresponding anterior and posterior leaflet segments (for example labelled as P3 and A3), e.g., by resection, otherwise residual regurgitation will occur in this area. The commissure points may be depicted on both the topology-based 2D model and the 3D visualisation of the segmented heart valve. The commissure points depicted on the topology-based 2D model and the 3D visualisation of the segmented heart valve may be related to each other such that both have the same relative position with respect to a reference point of the heart valve. Such reference point may be a centre of the heart valve, for example. When a commissure point on the topology-based 2D model or 3D visualisation of the segmented heart valve is moved, the corresponding commissure point of the other topology-based 2D model or 3D visualisation of the segmented heart valve can be automatically moved accordingly. Accordingly, the user may compare the position of the commissure points to the segmented heart valve of the 3D visualisation of the segmented heart valve. In other words, the user may assess whether the commissure points are positioned at the junction of two leaflets and the annulus in the 3D visualisation of the segmented heart valve. This may be done in any available frame of the visualisation of the segmented heart valve. The commissure points may define the commissure lines. In more detail, the commissure lines may extend from the annulus (e.g., from the circle defining an outer contour of the topology-based 2D model) to the centre of the topology-based 2D model. In more detail, each commissure line may extend from one commissure point to the centre of the topology-based 2D model. The commissure lines may be straight lines connecting two commissure points, preferably via the centre of the topology-based 2D model. The centre of the topology-based 2D model may be represented by an inner circle which may be coaxial to the annulus. The commissure lines may define a connecting line between two adjacent leaflets of the heart valve. In other words, the commissure lines may define an edge of two adjacent leaflets. The commissure lines may be a rough representation of the boundary between two adjacent leaflets, since in reality the leaflets do not have a straight boundary line. That is, the commissure lines may indicate an approximate extent of the boundary between the leaflets. Sectors between the commissure lines may define the leaflets.

According to a further embodiment of the present invention, the user input comprises instructions to modify a position of at least one commissure point of the topology-based 2D model. If the user wishes to adjust a position of one or more of the commissure points, he or she may input instructions so as to modify the position of the at least one commissure point in the 3D visualisation of the segmented heart valve and/or the topology-based 2D model. For example, the user may virtually grasp the commissure point to be modified and move it to a desired position on the annulus (or outer contour of the topology-based 2D model). The user may modify the commissure point in the 3D visualisation of the segmented heart valve and/or the topology-based 2D model. The commissure point in the 3D visualisation of the segmented heart valve or the topology-based 2D model that is modified by the user automatically adjusts its position according to the user's instructions. The corresponding commissure point in the other 3D visualisation of the segmented heart valve or the topology-based 2D model, whose position is not set directly by the user, automatically and simultaneously adjusts its position to match the position of the commissure point set directly by the user. Preferably, the user edits the topology-based 2D model (i.e., the commissure points within the topology-based 2D model) and observes the amendment of the position change of the commissure point within the 3D visualisation of the segmented heart valve. For example, through drag-and-drop, the commissure point of the topology-based 2D mode can be adjusted to fit the individual anatomy of the leaflets and be displayed onto the real segmentation (i.e., 3D visualisation of the segmented heart valve). The 3D visualisation of the segmented heart valve and the topology-based 2D model can be tracked over time. Pre-procedural planning can be used also during the procedure through projecting the model (e.g., the commissure points, commissure lines etc.) on new imaging data. In this case, the topology-based 2D model may be considered as a virtual "joystick" using which the user may adapt the position of the commissure points within the 3D visualisation of the segmented heart valve.

According to an embodiment of the present invention, the commissure points and the commissure lines are displayed on both the topology-based 2D model and the 3D visualisation of the segmented heart valve. That is, a relative position of the commissure points with respect to a point of reference may be the same in both the topology-based 2D model and the 3D visualisation of the segmented heart valve. A point of reference may be the canter of the heart valve for example. Alternatively, any other landmark may be used as a point of reference. The representation of commissure points and commissure lines in the 3D visualisation of the segmented heart valve may provide an opportunity to verify that commissure points are well placed in different images of the 3D or 4D volume dataset. The different images may be acquired at a different time point in the heartbeat cycle and/or at a different acquisition angle. Accordingly, the commissure points in each image can be adjusted to match the heart valve. Accordingly, the topology-based 2D model may be generated having a high accuracy.

According to a still further embodiment of the present invention, the user input comprises instructions to add a new commissure point and/or to delete a commissure point. That is, the initial topology-based 2D model may include three different leaflets. That is, the initial topology-based 2D model may have three commissure lines. However, depending on the type of valve being examined, the heart valve may have more or fewer leaflets. For example, the mitral valve has only two leaflets, while the tricuspid valve may have more leaflets. In addition, the tricuspid valve may have a different number of leaflets depending on the individual. That is, each person may have a different number of leaflets in their tricuspid valve. Therefore, the topology-based 2D model may be adapted to the specific heart valve under inspection by adding a commissure point or by deleting a commissure point. For example, the user may add a further commissure point by clicking on the circle defining the outer contour of the topology-based 2D model. Further, a new commissure line may be automatically created extending from the new commissure point to the centre of the topology-based 2D model. Accordingly, a further leaflet may be depicted by the topology-based 2D model. In an analogous way a commissure point may be deleted. Accordingly, the commissure line defined by the deleted commissure point may be also deleted. As a result, the topology-based 2D model may have one less leaflet. For example, the user may select a commissure point to be deleted and then provide instructions to delete that commissure point. Therefore, the topology-based 2D model may be adapted to the segmented heart valve under inspection.

According to a further embodiment of the present invention, the method further includes labelling the plurality of leaflets defined by the at least one commissure line. That is, the sectors between commissure lines may be labelled according to morphology definition of the respective leaflets defined by the sectors. The labels may correspond to generally used indications of the respective leaflets. For example, the tricuspid valve may comprise an anterior cusp, a posterior cusp and a medial cusp. The aortic valve may comprise a left coronary cusp, a right coronary cusp and a non-coronary cusp. For example, the mitral valve has two leaflets. The anterior leaflet may have a semi-circular shape and may attaches to two fifths of the annular circumference. There is continuity between the anterior leaflet of the mitral valve and the left and non-coronary cusp of the adjacent aortic valve, referred to as the aortic-mitral curtain. The motion of the anterior leaflet also defines an important boundary between the inflow (during diastole) and outflow (during systole) tracts of the left ventricle. The posterior leaflet of the mitral valve may have a quadrangular shape and may be attached to approximately three fifths of the annular circumference of the heart valve. The posterior leaflet typically has two well defined indentations which divides the leaflet into three individual scallops identified as P1 (anterior or medial scallop), P2 (middle scallop), and P3 (posterior or lateral scallop). The three corresponding segments of the anterior leaflet are A1 (anterior segment), A2 (middle segment), and A3 (posterior segment). This nomenclature may be considered as the labelling of the topology-based 2D model. Further, the nomenclature is an important tool to describe specific anatomic segmental anatomy between echocardiographer and surgeon. The indentations may be used to identify or to analyse the morphology of the respective leaflets and thus to label the respective leaflet according to the above nomenclature. The labelling may be done automatically based on the identified morphology and/or position of the respective leaflet. For example, the angle at which the 3D or 4D volume data set is acquired may be known so that, depending on the angle of acquisition, it is known which leaflets are expected and/or visible at a particular location on the heart valve. As a result, the automatic labelling may execute having a high accuracy. For example, a learning algorithm may be provided to identify the respective leaflet of the heart valve. That is, information of the morphology of the leaflet may be inputted to the learning algorithm as input data and the learning algorithm may output the label of the leaflet as output data. Accordingly, the learning algorithm may be trained beforehand using training data that includes the desired output data for specific input data. Using the learning algorithm to label the leaflets of the heart valve may speed up the process of creating the topology-based 2D model.

According to a further embodiment of the present invention, the visualisation of a segmented heart valve further includes a structure surrounding the heart valve. Surrounding of the heart valve may be tissue surrounding the heart valve under inspection. In more detail, the supporting structure of the heart valve may be depicted within the visualisation of the segmented heart valve. Accordingly, the commissure points may be set more accurately because the supporting structure may help to define where the boundary between two adjacent leaflets actually lies. For example, in the mitral valve, a portion of the posteromedial papillary muscle and/or a portion of the anterolateral papillary muscle may be visualized along with the segmented heart valve. Further, the visualisation of a surrounding of the segmented heart valve may help to define an orientation of the segmented heart valve. Moreover, the information of the surrounding of the segmented heart valve may be also inputted to a leaning algorithm for labelling the leaflets of the heart valve (refer also to the above outlined). Accordingly, the learning algorithm can more accurately and/or single out the particular valve by recognizing known landmarks in the surrounding tissue of the heart valve.

According to a further embodiment of the present invention, the visualisation of a segmented heart valve is a dynamical 4D visualisation of the heart valve. That is, the segmented heart valve may be visualized in four dimensions (4D). The fourth dimension may be the time. That is, the 4D visualisation of the segmented heart valve may dynamically represent the heart valve. For example, the segmented heart valve may be visualized in motion over the time span of a heart cycle. In other words, the segmented heart valve may be visualized by a sequence of frames so that the changes in the heart valve over time can be seen, preferably at a minimum of 20 frames per second. Accordingly, the segmented heart valve may be observed by a user over the cycle of a heartbeat. The topology-based 2D model may be projected onto the segmented heart valve even if the segmented heart valve is in motion. On the other hand, the topology-based 2D model is static and does not move. As a result, the topology-based 2D model may be adjusted to a plurality of different frames of the segmented heart valve. As a result, the commissure points (and thus to commissure lines) may be accurately set by the user. In addition, the time period in which the segmented heart valve is visualized may also include a change in the acquisition angle of the 3D or 4D volume data set. Thus, the heart valves may be defined by commissures points and commissures lines that are only visible at different acquisition angles. Consequently, the topology-based 2D model may be accurately created based on the segmented heart valve even in cases where the leaflets of the heart valve are not visible in one frame.

According to a still further embodiment of the present invention, the method further comprises
projecting a flow phenomenon on the 3D visualisation of the heart valve based on flow information,
identifying a location on the topology-based 2D model corresponding to a location of the of the flow phenomenon, and
providing a marker at the identified location.

In the state of the art, a projection of the leakage position on the valve is not intuitive for the user. The affected area for the procedure cannot be marked easily and must be estimated in the current state of the art. Currently, many of these procedures are performed without specific planning, increasing the time on the operating table as well as the abort rate due to incompatibility of the method or device. If image-based planning is performed, it is done in a fully manual way, taking up valuable physician time and showing a high variability and error-proneness.

In the present embodiment, an easy way is provided to indicate a leakage flow in the topology-based 2D model. Accordingly, the planning of an intervention may be facilitated and made more accurate. The flow phenomenon may be derived from Doppler information included in the 3D or 4D volume data set. Accordingly, flows (e.g., of blood) may be visualized. The Doppler information may be in the same coordinate system as the segmented heart valve.

Accordingly, the flow phenomenon may be projected at the correct position relative to the segmented heart valve. This position of the flow phenomenon in the visualisation of the segmented heart valve may then be transferred to the topology-based 2D model. This may be done by points of reference existing in both the visualised segmented heart valve and the topology-based 2D model. Such points of reference may be some or all commissure points and/or a centre of the heart valve. Then, the position of the flow phenomenon is known in the topology-based 2D model and may be indicated by a marker. That is, according to the present embodiment, there is provided a parametric display in the topology-based 2D model which may include additional information. This may be realized by a projection from 4D Echo (as an example of the segmented heart valve) to topological model (as an example of the topology-based 2D model). That is, a valve dashboard may be provided including information of the morphology and/or a functionality of the valve under inspection. For example, a regurgitant flow may be dynamically indicated on topology-based 2D model for the period in which the valve is typically closed (mitral, tricuspid: systole, pulmonic, aortic: diastole). Further, the location of the area of leakage may be indicated in the topology-based 2D model. The marker indicating a flow phenomenon in the topology-based 2D model may be dynamical. That is, the indication of leaflets and annulus in the topology-based 2D model may be static (i.e., may not move or change) whereas the marker indicative of the flow phenomenon may change depending on the heart cycle currently depicted by the visualisation of the segmented heart valve. Accordingly, the flow phenomenon may be inspected by the user in different positions of the heart valve. In one embodiment, the user may select a specific point within the heartbeat cycle to visualise the flow phenomenon at that specific time in the topology-based 2D model. Accordingly, the meaningfulness of the topology-based 2D model may be further increased. In addition, due to the standardized configuration of the topology-based 2D model, different patients or pathologies may be compared.

According to a further embodiment of the present invention, the marker includes a computer graphical representation of flow phenomenon indicative of the magnitude of the flow phenomenon, particularly iso-lines, vector field, streamlines and/or a colour map. In other words, the scale and the area size of the leakage may be displayed on the topology-based 2D model. That is, a magnitude of leakage through a heat map or contour graph (isolines) may be displayed in the visualisation of the segmented heart valve and/or the topology-based 2D model. Therefore, the meaningfulness of the topology-based 2D model may be even further increased by indicating a location, extent, and direction of the flow phenomenon (e.g., regurgitant flow). The flow phenomenon may be visualized and calculated in several ways in the visualisation of the segmented heart valve (e.g., as a vector field, or an iso-velocity shell). This information may then be projected on top of the topology-based 2D model. The area of the projection may be calculated based on the information included in the 3D or 4D volume data set. The location and size of the area may then be projected on the topological-based 2D model for easier localization in procedure planning. The local extent of leakage may be indicated by contour lines or a heat map. Accordingly, an intervention may be planned precisely in advance. Thus, the occurrence of unexpected situations during the intervention may be significantly reduced.

According to a still further embodiment of the present invention the method further includes receiving user input indicative of a location on the topology-based 2D model in which no marker should be displayed. That is, the user may define an area or sector within the topology-based 2D model in which no marker (i.e., no flow phenomenon) should be displayed. In other words, the user may define an exclusion area in the topology-based 2D model. For example, if the heart valve under inspection is provided adjacent to a second heart valve, there may be side stream induced by the second heart valve which do not describe the function of the heart valve under inspection. Therefore, it may be helpful to exclude some areas of the topology-based 2D model from displaying flow phenomenon. Thus, the simplicity of inspection may be improved. The user may expect a flow phenomenon near to the commissure lines as these lines indicate a borderline between adjacent leaflets (at least in a state in which the heart valve is closed or should be closed). Accordingly, the exclusion area may be defined in areas spaced apart from the commissure lines.

According to another aspect, the invention provides a computer program comprising program code instructions which, when executed by a processor, induce the processor to carry out the inventive method. The computer program may be in any code, in particular a code suited for computer graphic applications.

In a further aspect, the invention is directed to a computer-readable medium comprising an above-defined computer program. The computer-readable medium may be any digital data storage device, such as a USB-stick, hard disk, CR-ROM, SD card or SSD card. Naturally, the computer program need not be stored on such a computer-readable medium to be supplied the customers, but may be downloadable via the internet.

According to another aspect, the invention provides a system for analysing a heart valve including:
a user interface configured to receive user input,
a control unit configured to execute the above method.

The system may be included in the acquisition modality. Accordingly, the topology-based 2D model may be instantly generated during acquisition of the 3D or 4D volume data set. Alternatively, system may be provided centralized and may be connected to a database in which a plurality of 3D or 4D volume data sets are stored. In this case, a topology-based 2D model may be created for each data set and may be used in research and/or for future intervention planning.

According to one embodiment of the present invention, the topology-based 2D model is displayed on a 4D Echo clip of the valve where a valve annulus is already segmented. The topology-based 2D model may be rotated to fit the alignment of the Echo clip. Through "+" and "-" buttons on the user interface commissure points may be added and removed around the topology-based 2D model annulus in every sector of the topology-based 2D model to fit the number and morphology of leaflets. Drag-and-drop of the commissure points along the topology-based 2D model annulus may adjust the commissure points on the segmented heart valve annulus. The leaflets may be labelled according to the nomenclature proposed by Rebecca T. Hahn, Ludwig T. Weckbach, Thilo Noack, Nadira Hamid, Mitsunobu Kitamura, Richard Bae, Philipp Lurz, Susheel K. Kodali, Paul Sorajja, Jörg Hausleiter, Michael Nabauer, "Proposal for a Standard Echocardiographic Tricuspid Valve Nomenclature", JACC: Cardiovascular Imaging, Volume 14, Issue 7, 2021, Pages 1299-1305, ISSN 1936-878X, in case of the tricuspid valve, which is included herein by reference. All displays of the topology-based 2D model on the visualisation of the segmented heart valve clip may be tracked through one complete heart cycle. The selected morphology based on number and position of the commissure points may be mapped to the proposed nomenclature and a type of the heart valve may be assigned in case of the tricuspid valve. The default type on initialization may be the most common - Type I.

In the topology-based 2D model the leaflets may be continuously visualized even during periods of limited visibility in the visualisation of the segmented heart valve (i.e., the echo) clip. An alternative embodiment which could be used as an accelerated workflow option is a topology-based 2D model preselection based on the graphic representation of the morphologies. Through selecting of a valve type, the topology-based 2D model may be displayed on the visualisation of the segmented heart and may be adjusted through the landmarks (i.e., commissure points) to the visualisation of the segmented heart itself. The landmarks may be tracked through one heart cycle.

The inventive method or system is preferably implementable in connection with measurements of 4D Ultrasound datasets. The inventive method or system may be viewed as a digital joystick with which a user may transfer the topology-based 2D model on a 4D dataset, as well as a valve dashboard to visualise phenomena from the 4D dataset on the topology-based 2D model. It may be applicable to all heart valves. Further, the present invention may be used in imaging modalities such as CT (computed tomography) and MRI (magnetic resonance imaging) of the heart. The labelling of the leaflets based on morphologies may be standardized through the nomenclature use in this technology. The resulting dynamic labelling could also be useful in interventional navigation and live guidance such as the Philips EchoNavigator. The topology-based 2D model could also be used as a research and communication tool for valve research, comparison between patients, longitudinal comparison of one patient's valve, disease progression analysis, consult between physicians, etc.

In summary, the valves of the heart, such as the tricuspid and mitral valve, can be visualized in 4D echocardiography. This allows for a diagnosis and subsequent planning of the treatment. For the planning of many procedures, it is essential to know and mark the
morphology and position of the leaflets as well as the location and magnitude of the regurgitant flow. The anatomical landmarks of a valve are not very intuitive to mark and hard to edit in a moving 4D clip.

According to an aspect of the invention, a topology model mapped bi-directionally to the valve segmentation that can serve as both an edit control ("valve joystick") and a parametric display ("valve dashboard") of the valve is proposed. For the valve joystick the user input is mapped to the topology model on the 4D valve segmentation. The user can add or delete commissure points on the model and change their relative position. These edits are displayed on the segmented model and tracked over time. According to a further aspect of the invention, the valve dashboard maps the position and magnitude of the regurgitant flow through the valve from the 4D echo to the topological model, thus allowing for a better localization.

Single features of embodiments described above may be combined with other features or other embodiments and may thus form new embodiments. Advantages and configurations of the features are applicable to the new embodiments. Configurations and advantages defined in connection with the method are also applicable to the device and vice versa.

### BRIEF DESCRIPTION OF THE DRAWINGS

Useful embodiments of the invention shall now be described with reference to the attached figures. Similar elements or features are designated with the same reference signs in the figures. In the figures:
Fig. 1 is a schematic diagram of a visualisation of a segmented heart valve and a topology-based 2D model according to an embodiment of the present invention,
Fig. 2 is a schematic diagram of a visualisation of a segmented heart valve and a topology-based 2D model according to an embodiment of the present invention,
Fig. 3 is a schematic diagram of a plurality of topology-based 2D models according to an embodiment of the present invention,
Fig. 4 is a schematic diagram of a topology-based 2D models being adjusted according to an embodiment of the present invention,
Fig. 5A is a schematic diagram of a visualisation of a segmented heart valve and a topology-based 2D model according to an embodiment of the present invention,
Fig. 5B is a schematic diagram of a visualisation of a segmented heart valve and a topology-based 2D model according to an embodiment of the present invention, and
Fig. 6 is a schematic diagram of a user interface according to an embodiment of the present invention.

### DETAILED DESCRIPTION OF EMBODIMENTS

Throughout the figures, the same or corresponding features/elements of the various embodiments are designated with the same reference numbers.

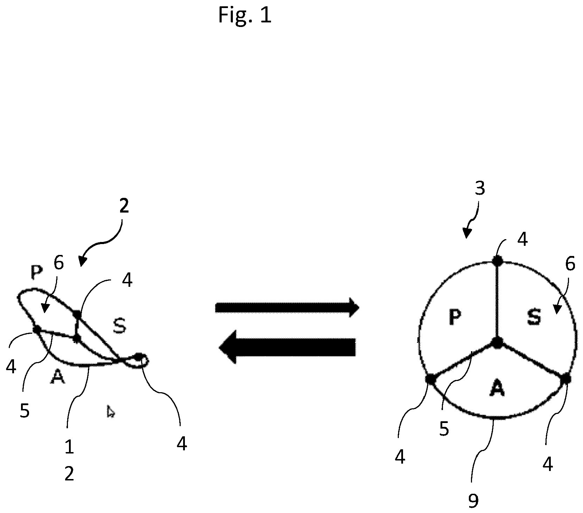

Fig. 1 is a schematic diagram of a visualisation of a segmented heart valve 2 and a topology-based 2D model 3 according to an embodiment of the present invention. On the left side in Fig. 1 the visualisation of a segmented heart valve 2 is depicted. On the right side of Fig. 1 the topology-based 2D model 3 is depicted. The heart valve is segmented from a 3D or 4D volume data set. The segmentation is carried out using known technologies. For example, the segmentation may be carried out as shown in DROGE, Hannah, et al. Mitral Valve Segmentation Using Robust Nonnegative Matrix Factorization. Journal of Imaging, 2021, 7. Jg., Nr. 10, S. 213 which is incorporated therein by reference. Once the heart valve is segmented and is displayed as the visualisation of a segmented heart valve 2, the topology-based 2D model 3 is created. The visualisation of a segmented heart valve 2 includes at least two leaflets 6. In the present case the visualisation of a segmented heart valve 2 includes three leaflets each being separated by a borderline. In other words, the heart valve which is represented by the visualisation has three leaflets. The topology-based 2D model 3 includes three commissure points 4 on a model annulus 9 and three commissure lines 5 defined by the commissure points 4. The three commissure lines 5 define the three leaflets 6 in the topology-based 2D model 3. The commissure lines 5 each connect a commissure point 4 to the centre of the topology-based 2D model. That is, the commissure points4 are connected with each other via the centre of the topology-based 2D model. In addition, the model annulus 9 is to scale to a segmentation annulus 12. The three commissure points 4 und three commissure lines 5 are also depicted in the visualisation of a segmented heart valve 2. In other words, the topology-based 2D model 3 is projected onto the visualisation of the segmented heart valve. Based on the visualisation of a segmented heart valve 2 the commissure points 4 may be adjusted by the user via a user interface 10 (more details follow below) such that the commissure points 4 correspond to a junction of the borderline of the leaflets 6 with the annulus 12. Through drag-and-drop, the topology-based 2D model 3 can be adjusted to fit the individual anatomy of the heart valve (e.g., to the leaflets 6) and be displayed onto the real segmentation (i.e., the visualisation of a segmented heart valve 2). The topology-based 2D model 3 can be tracked over time. Pre-procedural planning can be used also during the procedure through projecting the topology-based 2D model 3 on new imaging data.

In other words, the topology-based 2D model 3 of the heart valve includes commissure points 4, leaflets 6 with label and commissure lines 5. The topology-based 2D model and changes to the topology-based 2D model are projected on top of 4D Echo segmentation (i.e., the visualisation of a segmented heart valve 2) of the heart valve. Then, commissure points 4 can be edited on the topology-based 2D model. The following changes may be made to the commissure points 4:
a. Add / delete commissure points 4 on the topology-based 2D model based on morphology, and
b. Drag and drop commissure points 4 along model annulus 9, commissure points 4 also remain along the annulus in real imaging (i.e., the segmentation annulus 12). Then the sectors between commissure lines 5 are labelled according to morphology definition. Each sector is representing one leaflet 6 of the heart valve. In addition, the projection of the topology-based 2D model 3 is tracked through one complete heart cycle through the temporal tracking of the annulus 9, 12. The morphology nomenclature is mapped to adjusted topology-based 2D model.

The arrows in Fig. 1 show that an adaption of the commissure points 4 may be done in the topology-based 2D model 3 and in the visualisation of a segmented heart valve 2. The amendments are projected to the respective other one thereof. The letters depicted in Fig. 1 are the labelling of the leaflets according to the above identified nomenclature.

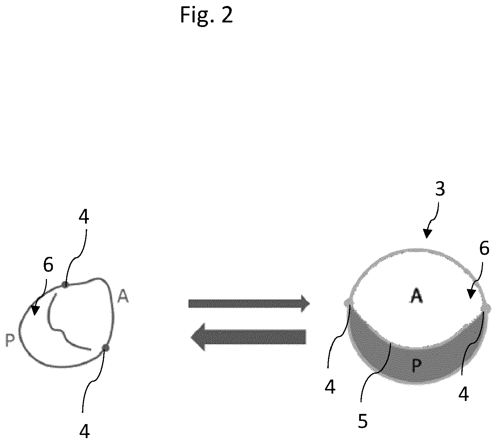

Fig. 2 is a schematic diagram of a visualisation of a segmented heart valve and a topology-based 2D model according to another embodiment of the present invention. The present embodiment essentially corresponds to the previous embodiment with the exception that in Fig. 2 another heart valve is depicted. That is, the heart valve in Fig. 2 has only two leaflets. However, the procedure is the same as in the previous embodiment. Further, in Fig. 2 the commissure points are directly connected to each other with a commissure line. In other words, the commissure line is not routed over a centre of the topology-based 2D model. In this case the commissure line may be adjusted by the user so as to fit to the border line of the two leaflets 6 of the heart valve.

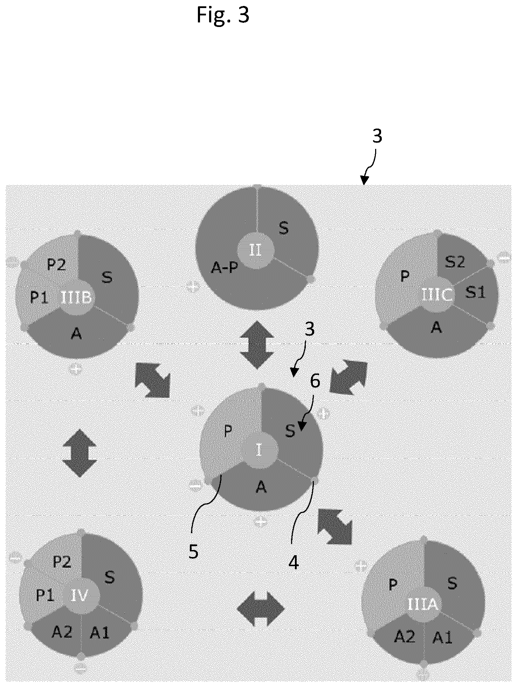

Fig. 3 is a schematic visualisation of a plurality of topology-based 2D models 3 according to an embodiment of the present invention. In the centre of Fig 3 an initial topology-based 2D models 3 is depicted. That is, the initial topology-based 2D model 3 is not adjusted to the real heart valve, but has initial settings. In the present embodiment the initial topology-based 2D models 3 has three commissure points 4 and three commissure lines 5. The topology-based 2D models 3 surrounding the initial topology-based 2D model 3 in Fig. 3 are adapted topology-based 2D models 3. The topology-based 2D models 3 are created as in the previous embodiments. Accordingly, a user may add, delete and/or shift commissure points 4 so as to adjust the topology-based 2D model 3 to the real heart valve depicted in the visualisation of a segmented heart valve. Further, the labels of the leaflets 6 may be manually amended by the user. In any topology-based 2D model 3 in Fig. 3, the centre of the topology-based 2D model 3 is a circle coaxial to the outer contour of the topology-based 2D model 3. Within the centre circle a label is provided which is indicative of a type of heart valve. The type of heart valve may be determined based on the morphology of the heart valve. Further, each commissure line 5 is connected with the centre of the topology-based 2D model 3. For simplicity, in Fig. 3 reference signs are only added to the original topology-based 2D model.

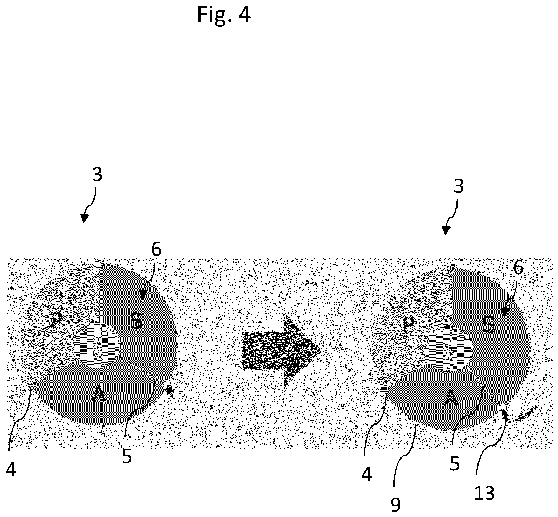

Fig. 4 is a schematic visualisation of a topology-based 2D models being adjusted according to an embodiment of the present invention. That is, on the left side in Fig. 4 the initial topology-based 2D model 3 is depicted. Then, the user may grab a commissure point 4 with a pointing device 13 and drag the commissure point 4 in the desired direction along the model annulus 9 (refer to the small arrow in Fig. 4). In other words, the topology-based 2D model 3 may be a "valve joystick" because the adjustment to the commissure point 4 may be also automatically applied to the segmented heart valve (not depicted in Fig. 4). The topology-based 2D model 3 is displayed on the 4D Echo clip (i.e., the visualisation of a segmented heart valve 2) of the valve where the valve annulus (i.e., the segmentation annulus 12) is already segmented. The complete topology-based 2D model 3 can be rotated to fit the alignment of the Echo clip. Through "+" and "-" buttons around the model annulus, commissure points 4 can be added and removed in every sector of the topology-based 2D model 3 to fit the number and morphology of leaflets 6. Drag-and-drop of the commissure points 4 along the model annulus 9 adjusts the commissure points 4 on the Echo annulus 12. The leaflets 6 are labelled according to the nomenclature proposed by Hahn et. al. in case of the tricuspid valve. All displays of the topology-based 2D model 3 on the Echo clip are tracked through one complete heart cycle. The selected morphology based on number and position of the commissure points 4 is mapped to the proposed nomenclature and a type is assigned in case of the tricuspid valve. The default type on initialization is the most common - Type I. The added value lies in the continuous visualisation of the leaflets 6 even during periods of limited visibility in the Echo clip. An alternative embodiment which could be used as an accelerated workflow option is a model preselection based on the graphic representation of the morphologies. Through selecting a valve type, it is displayed on the Echo clip and can be adjusted through the landmarks (i.e., commissure points) on the clip itself. The landmarks can be tracked through one heart cycle.

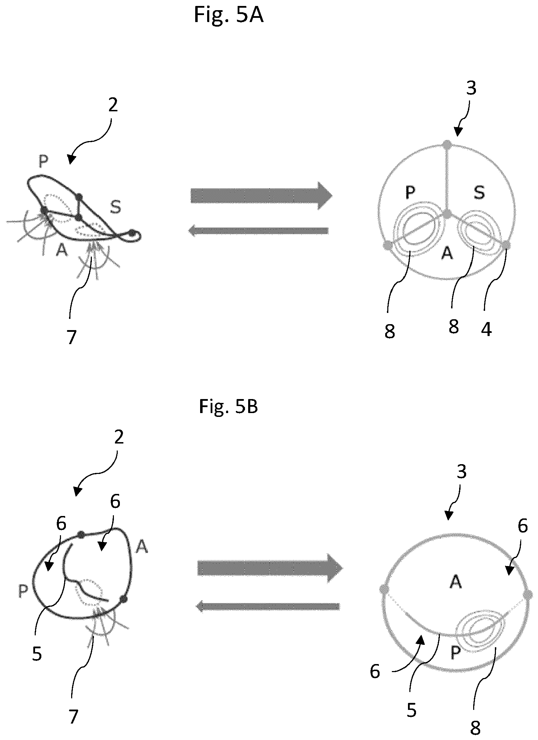

Fig. 5A is a schematic diagram of a visualisation of a segmented heart valve 2 and a topology-based 2D model 3 according to an embodiment of the present invention. The segmented heart valve 2 and a topology-based 2D model 3 correspond to the segmented heart valve 2 and a topology-based 2D model 3 according to any one of the previous embodiments. In the present embodiment in the segmented heart valve 2 and a topology-based 2D model 3 at least one flow phenomena 7 is additionally indicated. Accordingly, in the present embodiment a parametric display is provided which projects a flow phenomenon from 4D Echo (i.e., segmented heart valve 2) to topology-based 2D model 3. Hence, the present embodiment may provide a "valve dashboard". That is, the topology-based 2D model 3 can be considered as a "valve dashboard" as it displays the flow phenomena in the heart valve.

Specifically, as an example of the flow phenomena 7 at the segmented heart valve 2, a regurgitation flow is dynamically projected or displayed in the 4D echo for the period during which the valve is typically closed (mitral, tricuspid: systole, pulmonic, aortic: diastole). Then, a location of the area of leakage on the topology-based 2D model 3 is displayed. In addition, the area size of the leakage is shown scaled on the topology-based 2D model 3. Further, a magnitude of leakage through a heat map or contour graph (isolines) is displayed on the projection. The visualisation of the flow phenomena 7 in the topology-based 2D model 3 is realized by a marker 8 which might be changed with respect to its visualisation properties. That is, the marker 8 may be individually adapted to the preferences of the user.

In other words, the "valve dashboard" of the present invention provides a visualisation of the location, extent, and direction of the flow phenomenon, e.g., regurgitant flow, in several ways in 4D echo (i.e., segmented heart valve 2) (e.g., as a vector field, or an iso-velocity shell). This information is then projected on top of the topology-based 2D model 3 in 4D echo. The area of the projection is calculated. The location and size of the area are then projected on the topology-based 2D model 3 for easier localization in procedure planning. The local magnitude of the flow phenomenon (e.g., leakage) is indicated through contour lines or a heat map.

Fig. 5B is a schematic visualisation of a visualisation of a segmented heart valve and a topology-based 2D model according to an embodiment of the present invention. Fig. 5B corresponds essentially to Fig. 5A with the exception that the heart valve in Fig. 5B has only two leaflets.

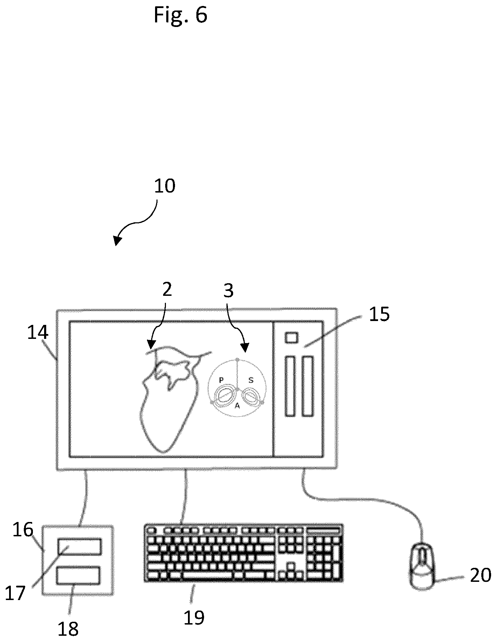

FIG. 6 shows a user interface 10 according to an embodiment of the invention. In this setting, the segmented heart valve 2 and the topology-based 2D model 3 are depicted on a conventional computer screen 14. The screen 14 may comprise a panel 15 of buttons and sliders allowing the user to tilt, zoom, move or otherwise manipulate the segmented heart valve 2 and/or the topology-based 2D model 3. Also in such a user interface 10, it is useful tool to have a volume rendered VOI which is locked to the position of a feature of interest on a dynamic model of a dynamic anatomical structure, such as the beating heart. The display may be controlled by a computer 16, such as a PC, including a processor 17 and a hard disc 18. The user interface may have input tools such as a keyboard 19 and/or a mouse (i.e., a pointing device) 20.

The above-discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

## Claims

1. Computer implemented method for adjusting a morphology of a heart valve model segmented from a 3D or 4D volume data set, the method comprising:
providing a 3D visualisation of a segmented heart valve (2) on a user interface, wherein the heart valve is segmented from the 3D or 4D volume data set,
creating a topology-based 2D model (3) of the heart valve,
displaying the 2D model (3) on the user interface,
receiving user input data for further adjusting the 2D model (3) via the user interface.

2. Method according to claim 1, wherein the topology-based 2D model (3) is created by mapping the segmented heart valve (2) to scale onto a plane.

3. Method according to claim 1 or 2, where the topology-based 2D model (3) is displayed on the user interface next to the 3D visualisation of the segmented heart valve (2).

4. Method according to any preceding claims, wherein the 2D model includes commissure points (4) defining at least one commissure line (5) being indicative of a separating line between at least two leaflets (6) of the heart valve.

5. Method according to claim 4, wherein the user input comprises instructions to modify a position of at least one commissure point (4) of the topology-based 2D model (3).

6. Method according to claim 4 or 5, wherein the commissure points (4) and the commissure lines (5) are displayed on both the topology-based 2D model (3) and the 3D visualisation of the segmented heart valve (2).

7. Method according to any one of claims 4 to 6, wherein the user input comprises instructions to add a new commissure point and/or to delete a commissure point.

8. Method according to any one of claims 4 to 7, wherein the method further includes labelling the plurality of leaflets (6) defined by the at least one commissure line (5).

9. Method according to any one of the preceding claims, wherein the visualisation of a segmented heart valve (2) further includes a structure surrounding the heart valve.

10. Method according to any one of the preceding claims, wherein the visualisation of a segmented heart valve 2() is a dynamical 4D visualisation of the heart valve.

11. Method according to any one of the preceding claims, wherein the method further comprises
projecting a flow phenomenon (7) on the 3D visualisation of the heart valve (2) based on flow information,
identifying a location on the topology-based 2D model (3) corresponding to a location of the of the flow phenomenon, and
providing a marker (8) at the identified location.

12. Method according to claim 11, wherein the marker (8) includes a computer graphical representation of flow phenomenon (7) indicative of the magnitude of the flow phenomenon (7), particularly iso-lines, vector field, streamlines and/or a colour map.

13. Method according to claim 11 or 12, wherein the method further includes receiving user input indicative of a location on the topology-based 2D model (2) in which no marker should be displayed.

14. Computer program including program code that, when executed on a control unit, is configured to execute the method according to any one of the preceding claims.

15. System (1) for analysing a heart valve including:
a user interface (10) configured to receive user input,
a control unit (11) configured to execute the method according to any one of claims 1 to 13.
